# FASCICULE DE BREVET EUROPEEN

(11) **EP 3 881 222 B1**
(45) Date de publication et mention de la délivrance du brevet: **24.12.2025**
(21) Numéro de dépôt: 19801562.0
(22) Date de dépôt: 12.11.2019
(51) Int. Cl.: G06V 40/40

(54) **PROCEDE DE DETECTION AUTOMATIQUE DE L'USURPATION DE VISAGE**
VERFAHREN ZUR AUTOMATISCHEN ERKENNUNG VON GESICHTSIMITATION
METHOD FOR AUTOMATICALLY DETECTING FACIAL IMPERSONATION

(30) Priorité: 14.11.2018 FR 1860508
(43) Date de publication de la demande: 22.09.2021
(73) Titulaire: SURYS, 77607 Marne la Vallee Cedex 3 (FR)
(72) Inventeur: MAHFOUDI, Gaël, CAPENS 31410 (FR); TRABELSI, Anis, 02310 PAVANT (FR); PIC, Marc-Michel, 92100 BOULOGNE-BILLANCOURT (FR)
(74) Mandataire: INNOV-GROUP
(86) Numéro de dépôt international: PCT/EP2019/081017
(87) Numéro de publication internationale: WO 2020/099400

(56) Documents cités:
- EP-A1- 3 282 390
- WO-A1-2014/060441

## Description

### DOMAINE DE L'INVENTION

La présente invention concerne le domaine de la protection contre l'usurpation d'identité, en particulier contre l'usurpation de visage, plus connue sous l'anglicisme « anti face spoofing », l'usurpation d'identité visant à déjouer un capteur biométrique en lui présentant une image biométrique contrefaite d'un utilisateur authentique.

La reconnaissance faciale est de plus en plus souvent utilisée, en particulier pour sécuriser l'accès à certaines applications ou services. L'usurpation de visage consiste à ce qu'une personne non autorisée utilise l'image du visage d'une personne autorisée, à l'insu de celle-ci, afin contourner la sécurité et pouvoir accéder ainsi auxdits services, par exemple dans le cadre d'une vérification d'identité en ligne. L'usurpation de visage peut donc correspondre à des actes malveillants voire frauduleux.

Par exemple, il peut être demandé à un utilisateur de se présenter à une webcam pour vérifier son identité. Le contournement de la version naïve d'un tel système de sécurité est élémentaire. Il suffit au faussaire de présenter une photo de la personne autorisée en lieu et place de lui-même. Il a donc été développé d'autres solutions, visant à émettre des messages d'instructions de mouvement à l'utilisateur par exemple de cligner un oeil, de bouger la tête, etc. Toutefois, là encore des solutions à base de masques permettent de contourner relativement facilement un tel système de sécurité.

En outre, il existe également des logiciels de modification de visage, qui permettent des fraudes connues sous le terme de fraude par morphing, ou encore des logiciels d'échange de visage, ou « face swapping » par anglicisme, qui permettent d'échanger tout ou partie d'un visage par un autre, par exemple pour un document d'identité entre le visage du porteur légitime du document d'identité et le visage du fraudeur, pour créer une nouvelle image numérique et qui peuvent permettre de tromper certains systèmes de vérification d'identité par reconnaissance faciale avec une caméra fixe.

Il est possible d'injecter dans un objet communicant des fausses données de localisation GPS en piratant le système d'exploitation. De manière similaire, il est possible d'injecter un flux vidéo dans un objet communicant, provenant d'une source autre que la caméra dudit objet communicant.

Il existe donc un besoin de limiter ou de contrer de telles attaques de façon automatique, c'est-à-dire autrement que par un opérateur.

Toutefois, ce type de solution nécessite des ressources de calcul assez élevées.

Il est connu le document EP3282390, qui prévoit la détection à distance d'une personne vivante. Cependant, ce document vise à vérifier l'identité des individus. Au contraire la présente invention ne vise pas à identifier un individu, celui-ci n'a pas besoin d'être préenregistré. La détection de l'usurpation d'un visage selon l'invention peut être mise en oeuvre avec tout visage nouveau, inconnu.

La présente invention ne vise pas, non plus, à détecter l'utilisation de masques humains 3D en silicone, ni à se prémunir contre des attaques par des moyens d'Etats, mais vise à se prémunir contre les stratégies utilisables par l'homme de la rue.

Elle permet de confirmer la matérialité de la personne en face de l'écran, c'est-à-dire que le visage en face d'une webcam est réellement une personne physique et non un masque ou une image projetée ou affichée.

La présente invention peut être mise en oeuvre à la fois au moment de l'enrôlement d'un utilisateur de référence et au moment d'un contrôle d'identité qui comprendra d'une part la vérification de la matérialité de cette personne puis la comparaison avec une référence pour une véritable authentification.

### RESUME DE L'INVENTION

Plus précisément, l'invention concerne selon un premier de ses objets, un procédé de détection de l'usurpation d'un visage (30) d'un sujet, comme définit dans la revendication 1.

On peut prévoir que la fonction mathématique appliquée aux coordonnées dudit ensemble de points biométriques prédéterminés, et appliquée auxdites valeurs de l'accélération subie par la caméra est la même et en l'espèce la fonction identité, de sorte que le fichier de données (40) comprend lesdites coordonnées dudit ensemble de points biométriques prédéterminés et lesdites valeurs de l'accélération subie par la caméra

On peut aussi prévoir une fonction de filtrage, en particulier des valeurs de l'accélération subie par la caméra.

Dans un mode de réalisation, les étapes consistant à :
- acquérir (200) une séquence de trames vidéo, et
- enregistrer (300) l'accélération subie par la caméra,
sont mises en œuvre par un objet communicant (20) équipé d'une caméra et d'un accéléromètre, ledit objet communicant étant mis en mouvement selon un parcours courbe imposé par rapport au dit visage (30), ledit visage étant immobile pendant l'acquisition de la séquence de trames vidéo par la caméra.

Dans un mode de réalisation, l'étape (500) consistant à appliquer un algorithme de classification automatique par apprentissage automatique comprend l'application d'un algorithme de classification automatique par apprentissage automatique monoclasse ou mutliclasses.

Dans un mode de réalisation, l'étape (500) consistant à appliquer un algorithme de classification automatique par apprentissage automatique comprend l'application d'un algorithme de classification automatique par apprentissage automatique supervisé.

Dans un mode de réalisation, l'étape (500) consistant à appliquer un algorithme de classification automatique par apprentissage automatique comprend l'application d'un algorithme de classification automatique par apprentissage automatique basé sur un réseau de neurones artificiels.

Dans un mode de réalisation, l'étape (500) consistant à appliquer un algorithme de classification automatique par apprentissage automatique comprend l'application d'un algorithme de classification automatique par apprentissage automatique de type longue mémoire à court terme (LSTM).

Dans un mode de réalisation, l'étape (500) consistant à appliquer un algorithme de classification automatique par apprentissage automatique comprend l'application d'un algorithme de classification automatique par apprentissage automatique basé sur une machine à vecteurs de support (SVM).

Dans un mode de réalisation, l'étape (500) consistant à appliquer un algorithme de classification automatique par apprentissage automatique comprend l'application d'un algorithme de classification automatique par apprentissage automatique non supervisé ou semi supervisé basé sur un apprentissage par renforcement (RL).

Dans un mode de réalisation, le procédé comprend en outre une étape consistant à détecter si le flux vidéo dont est extraite la séquence de trames vidéo a été interrompu.

Dans un mode de réalisation, si le flux vidéo dont est extraite la séquence de trames vidéo a été interrompu, le procédé comprend en outre une étape consistant à détecter au moins la trame à partir de laquelle ledit flux vidéo a été interrompu.

Dans un mode de réalisation, on prévoit en outre une étape (100) d'initialisation, comprenant l'acquisition de plusieurs séquences de trames vidéo de plusieurs visages (30) respectifs, et l'enregistrement de l'accélération subie par la caméra pendant l'acquisition desdites séquences.

Dans un mode de réalisation, les étapes consistant à :
- sélectionner (210) tout ou partie de l'ensemble de trames de la séquence vidéo, et
- extraire (230), sur chaque image de l'ensemble de trames sélectionnées, les coordonnées d'un ensemble de points biométriques prédéterminés et le code temporel de la trame correspondante,

Sont mises en oeuvre :
a) Soit sur l'objet communicant (20) pour créer ledit fichier de données (40),

Le procédé comprenant alors en outre une étape d'envoi dudit fichier de données (40) par ledit objet communicant (20) à un serveur (50) configuré pour mettre en oeuvre les étapes consistant à :
- appliquer (500) un algorithme de classification automatique par apprentissage automatique au fichier de données,
- émettre (600) un signal représentatif de la classe attribuée par l'algorithme de classification automatique par apprentissage automatique au fichier de données ;

Ledit signal représentatif de la classe attribuée pouvant être transmis audit objet communicant (20) par le serveur ;
b) Soit sur un serveur (50),
Le procédé comprenant alors en outre une étape d'envoi de ladite séquence vidéo par l'objet communicant (20) audit serveur (50), le serveur (50) étant configuré pour mettre en oeuvre les étapes consistant à :
- générer (400) et enregistrer dans une mémoire un fichier de données (40)
- appliquer (500) au fichier de données un algorithme de classification automatique par apprentissage automatique, et
- émettre (600) un signal représentatif de la classe attribuée au fichier de données par l'algorithme de classification automatique par apprentissage automatique.

Selon un autre de ses objets, l'invention concerne un programme d'ordinateur comprenant des instructions de code de programme pour l'exécution des étapes du procédé selon l'invention, lorsque ledit programme est exécuté sur un ordinateur.

Avantageusement selon l'invention, il n'est pas nécessaire de mettre en oeuvre une étape de reconstruction complète en 3D du visage de l'utilisateur, ce qui permet des calculs beaucoup plus rapides et/ou moins consommateurs en ressources de calcul, ce qui permet éventuellement d'externaliser une partie des opérations dans l'objet communicant.

D'un point de vue matériel, une simple caméra suffit pour l'acquisition de la séquence vidéo. L'invention est donc beaucoup plus simple à mettre en oeuvre que les solutions basées sur des caméras 3D, infra rouge, thermique, etc.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

- la figure 1 illustre un mode de réalisation de la mise en oeuvre du procédé selon l'invention,
- la figure 2 illustre un mode de réalisation de l'extraction de points biométriques,
- la figure 3 illustre un mode de réalisation de l'extraction de points biométriques sur le nez vu du côté droit d'un visage,
- la figure 4 illustre les angles du triangle identifié sur la figure 3,
- la figure 5 illustre un extrait d'un mode de réalisation d'un fichier de données selon l'invention
- la figure 6 illustre un mode de réalisation du procédé selon l'invention,
- la figure 7 illustre des résultats d'un mode de réalisation d'une classification multiclasse selon l'invention.

### DESCRIPTION DETAILLEE

Par souci de concision, un seul mode de réalisation sera décrit ici.

Dans ce mode de réalisation, un utilisateur est en possession d'un objet communicant 20 (par exemple un téléphone intelligent ou Smartphone par anglicisme, une tablette, etc.), c'est-à-dire un dispositif électronique équipé de :
- une caméra 2D,
- de moyens de mesure et
- de moyens de communication.

Les moyens de mesure comprennent les accéléromètres, les boussoles et les gyroscopes. Ils sont configurés pour mesurer au moins l'une parmi :
- l'accélération linéaire de l'objet communicant en mouvement,
- l'accélération angulaire de l'objet communicant en mouvement,
- la vitesse linéaire de l'objet communicant en mouvement,
- la vitesse angulaire de l'objet communicant en mouvement,
- l'orientation de l'objet communicant par rapport à un référentiel prédéfini.

Par concision, les moyens de mesure sont dénommés « accéléromètre » dans la présente invention et les données issues de l'un quelconque des moyens de mesure ci-dessus sont dénommées « données accélérométriques ».

L'avantage d'un objet communicant 20 est que les données accélérométriques de l'accéléromètre sont mécaniquement couplées au mouvement de la caméra de celui-ci et synchronisables avec ladite caméra.

La synchronisation entre l'accéléromètre et les trames du flux vidéo acquis par la caméra peut être réalisée en post traitement. Elle peut également être réalisée en temps réel, par déclenchement sur la base de pas d'horloge. Par exemple à un tic d'horloge donné, on déclenche simultanément une prise de vue photo, c'est-à-dire une trame, et l'enregistrement des valeurs de l'accéléromètre.

Par exemple pour se connecter à un site sur Internet, ou s'authentifier, il peut être demandé à cet utilisateur de démontrer / valider que celui-ci est bien l'être humain qu'il déclare être. Le site Internet doit donc s'assurer que l'utilisateur ne peut pas présenter le visage 30 d'un tiers à une webcam.

À cet effet, il est proposé à l'utilisateur de réaliser une manipulation prédéterminée très simple avec son objet communicant 20, consistant à filmer son visage 30 en déplaçant son objet communicant 20 selon un parcours imposé, le parcours étant courbe par rapport au visage 30, le visage 30 étant immobile pendant la prise de vue.

La prise de vue consiste à enregistrer une vidéo du visage 30 tout au long du parcours imposé. De préférence, le mouvement de l'objet communicant 20 est effectué dans un plan sensiblement horizontal.

Par vidéo, on entend instinctivement un flux vidéo comprenant un ensemble de trames successives, ou une pluralité de photographies prises en série.

Pendant le déplacement de l'objet communicant 20, la vidéo enregistre un ensemble de trames et les valeurs de l'accéléromètre. Parmi les valeurs de l'accéléromètre sont conservées les quaternions unitaires représentant le référentiel par rapport auxquels les accélérations sont calculées, permettant ainsi de resynchroniser les données vis-à-vis d'éventuelles dérives.

Par parcours imposé, on entend que le déplacement de l'objet communicant n'est pas décidé par l'utilisateur. Le parcours peut être interactif, c'est-à-dire que une ou plusieurs instructions ou indications de déplacement peuvent envoyées à l'utilisateur par le biais de l'objet communicant. L'utilisateur doit alors mouvoir son objet communicant en respectant l'indication (ou les indications) de déplacement. Ces mouvements de l'objet communicant sont détectés par l'accéléromètre et/ou par la caméra et ces données peuvent être envoyées à un serveur ou un opérateur qui vérifie la cohérence entre l'instruction de déplacement et le mouvement effectif de l'objet communicant.

Les indications de déplacement à opérer par l'utilisateur avec l'objet communicant 20 le long du parcours imposé sont communiquées à l'utilisateur par tous moyens connus, par exemple par texte ou par vidéo sur le site Internet ; ou encore par des indicateurs graphiques notamment sous forme de flèches affichées sur l'écran de l'objet communicant 20 dont le sens indique à l'utilisateur dans quel sens mouvoir celui-ci.

Le mouvement de l'objet communicant 20 est effectué selon un parcours courbe imposé par rapport au visage 30 dudit sujet, ledit visage 30 du sujet étant immobile pendant la prise de vue de la caméra.

Par exemple l'utilisateur effectue manuellement le parcours imposé.

En l'espèce, on peut prévoir un mouvement en forme d'arc de cercle dans un plan sensiblement horizontal, ledit plan sensiblement horizontal passant de préférence entre les yeux et la bouche de l'utilisateur, le visage de l'utilisateur étant en permanence dans le champ de l'objectif tout au long du parcours de manière à ce que la totalité du visage soit visible et si possible centré pour limiter les aberrations optiques.

Pendant le mouvement de l'objet communicant 20, la caméra de celui-ci effectue une prise de vue continue, c'est-à-dire une acquisition 200, et enregistre une séquence vidéo.

De même, les données de l'accéléromètre de l'objet communicant 20 sont enregistrées de manière synchronisable à la séquence vidéo.

On peut prévoir une étape de contrôle consistant à évaluer la présence de défauts aléatoires dans le déplacement, attribuables à un mouvement humain et qui n'existeraient pas avec une prise de vue simulée ou automatisée, en particulier effectuée sur un rail.

A cet effet, on peut prévoir que le contrôle comprend un seuillage haut et/ou un seuillage bas des données accélérométriques.

Pendant l'enregistrement de la séquence vidéo, il est recommandé que le visage 30 de l'utilisateur soit aussi immobile que possible pour des raisons exposées ultérieurement.

### Traitement de la séquence vidéo

La séquence vidéo comprend un ensemble de trames vidéo successives ou un ensemble de photographies en série, ci-après « trames » par concision.

On peut prévoir de sélectionner 210 tout ou partie de l'ensemble des trames de la séquence vidéo.

Sur chaque image de chaque trame sélectionnée, on prévoit d'identifier un ensemble de points biométriques 10 prédéterminés puis d'extraire 230 les coordonnées de l'ensemble de points biométriques 10 prédéterminés, ainsi que le code temporel de la trame correspondante.

Le code temporel de chaque trame est aisément accessible.

Pour identifier un ensemble de points biométriques 10 prédéterminés, on prévoit d'appliquer 220 un algorithme de reconnaissance faciale à chaque image de chaque trame sélectionnée.

L'identification d'un point biométrique 10 consiste à attribuer audit point biométrique 10 un ensemble de valeurs comprenant au moins :
- les coordonnées dudit point biométrique 10 ;
- un élément morphologique local du visage, correspondant à la position dudit point biométrique 10,
- un identifiant unique pour ledit point biométrique 10.

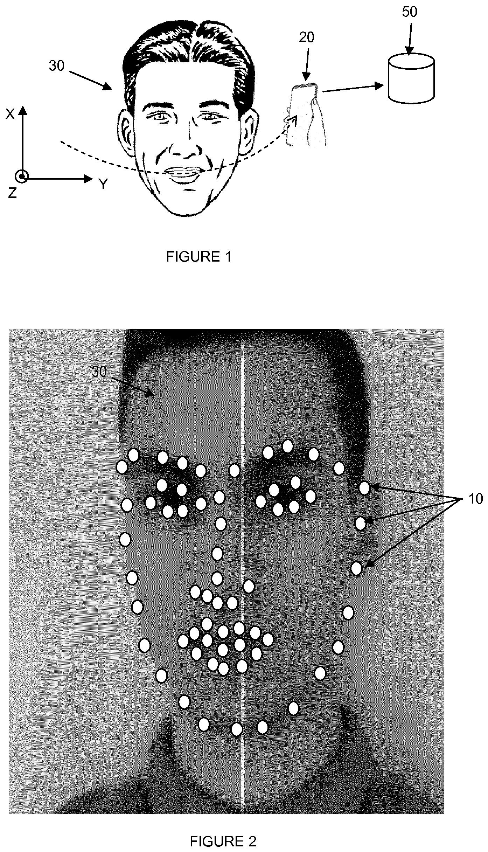

Par exemple, on peut appliquer un logiciel basé sur la bibliothèque logicielle DLIB, et qui détermine la position d'un ensemble de points biométriques 10 prédéterminés, chaque point correspondant à un élément morphologique prédéterminé d'un visage 30, par exemple le coin de l'œil droit, le coin de l'œil gauche, le bas du nez, le bout du nez, les coins de la bouche, etc. comme illustré sur la figure 2 où chaque rond indique un point biométrique 10.

Chaque trame est traitée de sorte à identifier un ensemble de points biométriques 10. Ainsi, il est possible de repérer un élément morphologique local prédéterminé sur chaque trame, par exemple le bout du nez, grâce à son point biométrique identifié correspondant, de manière indépendante de trame en trame, c'est à dire sans mettre en oeuvre de logiciel de suivi de points biométriques 10, ou « tracking » par anglicisme connus de l'art antérieur.

Grâce à cette caractéristique, il est possible de connaître la position de chaque point biométrique identifié, indépendamment du flux vidéo. Autrement dit, alors qu'un logiciel de tracking perd la position d'un point biométrique identifié en cas de coupure temporaire du flux vidéo, l'invention permet de connaître, donc éventuellement de suivre, la position d'un point biométrique identifié sur chaque trame, même en cas de flux vidéo interrompu.

Avantageusement, l'invention permet également, grâce à cette caractéristique, de détecter si, et quand, le flux vidéo a été interrompu ; par exemple en calculant une absence de linéarité dans le changement de position des points biométriques 10, ou dans le changement des valeurs de l'accéléromètre au regard des instructions de déplacement et des codes temporels des trames vidéo.

### Traitement des données accélérométriques

Par données accélérométriques, on entend les données issues de l'accéléromètre de l'objet communicant 20. Ces données sont enregistrées grâce à une étape 300 d'enregistrement des données de l'accéléromètre.

On peut alors déterminer 310 la valeur de l'accélération subie par la caméra, par exemple en sélectionnant les valeurs de l'accéléromètre correspondant à l'instant du code temporel de la trame sélectionnée, ou encore par interpolation ou par extrapolation.

Un accéléromètre 3D est configuré pour mesurer l'accélération selon trois axes orthogonaux XYZ (figure 1). Les données accélérométriques comprennent l'accélération selon chacun de ces axes X, Y et Z et peuvent comprendre l'accélération angulaire autour de chacun de ces axes X, Y et Z. Avec un gyroscope ou une boussole, les données accélérométriques sont relatives à la position ou l'orientation de l'objet communicant. Suivant les capteurs utilisés, l'information accélérométrique peut-être une mesure directe ou une valeur issue d'un calcul basé sur la mesure d'un ou plusieurs capteurs.

Ces données peuvent être traitées par une fonction mathématique, et le résultat peut être enregistré dans un fichier de données 40 décrit ci-dessous.

### Fichier de données 40

Les étapes de traitement de la séquence vidéo et de traitement des données accélérométriques permettent de générer 400 un fichier de données 40.

Le fichier de données 40 est une table comprenant à chaque instant de mesure :
- les données de l'accéléromètre de l'objet communicant 20, ou une fonction de celles-ci, et
- l'identification des points biométriques 10 prédéterminés, dont au moins les coordonnées de la position de l'ensemble de points biométriques 10 prédéterminés, ou une fonction de celles-ci.

Avantageusement, on peut prévoir qu'il n'est pas nécessaire de calculer l'angle duquel la position de l'objet communicant 20 a varié depuis la mesure précédente, ce qui évite des calculs et des dérives, donc ce qui permet une mise en oeuvre plus rapide et plus fiable du procédé.

En l'espèce, le fichier de données 40 se présente sous la forme d'une matrice à 2 dimensions, dont une des dimensions comprend le code temporel de chaque trame sélectionnée, et dont l'autre dimension comprend un ensemble de données issues de l'accéléromètre.

On peut prévoir que les données issues de l'accéléromètre sont les mesures brutes de l'accéléromètre. On peut aussi prévoir, à titre d'alternative ou en combinaison, que les données enregistrées dans le fichier de données 40 sont nos résultats de calculs basés sur les données brutes.

Par exemple, on peut prévoir une étape de filtrage des données brutes.

On peut aussi prévoir d'enregistrer des données différentielles dans le fichier de données 40. Par exemple pour chaque dimension de l'accéléromètre : la valeur de l'accéléromètre selon cette dimension pour une trame au temps t moins la valeur de l'accéléromètre selon cette même dimension pour la trame au temps t-1, et la même chose pour les deux autres dimensions de l'accéléromètre tridimensionnel, ce qui rend le résultat plus sensible.

Le fichier de données 40 comprend les coordonnées d'un ensemble de points biométriques 10 prédéterminés (non illustré).

On peut aussi prévoir que le fichier de données 40 comprend un traitement mathématique des coordonnées de l'ensemble de points biométriques 10 prédéterminés.

Par exemple, on peut prévoir de calculer des distances ou des angles entre différents points biométriques 10, des statistiques (moyennes, écart type, etc.), ou encore d'autres fonctions mathématiques.

Par exemple avec un mouvement courbe de l'objet communicant 20 devant le visage 30 de l'utilisateur, le long d'un parcours imposé partant d'un profil du visage 30 et allant jusqu'à l'autre profil du visage 30, ce qui est illustré par une flèche en pointillés sur la figure 1, la distance entre les deux yeux, calculée de trame en trame va d'abord augmenter jusqu'à ce que la caméra de l'objet communicant 20 soit en face du visage 30, puis diminuer. Une telle distance entre les deux yeux pour chaque trame peut être enregistrée dans le fichier de données 40.

Par exemple, le mouvement est sensiblement en arc de cercle, notamment si l'utilisateur tient l'objet communicant à bout de bras tout au long du parcours imposé, ou en arc d'ellipse. On peut prévoir également une tolérance verticale correspondant aux fluctuations naturelles du mouvement d'un bras humain, par exemple on considère que le parcours imposé doit être effectué dans un plan horizontal plus ou moins une marge prédéfinie, en l'espèce de 10 cm.

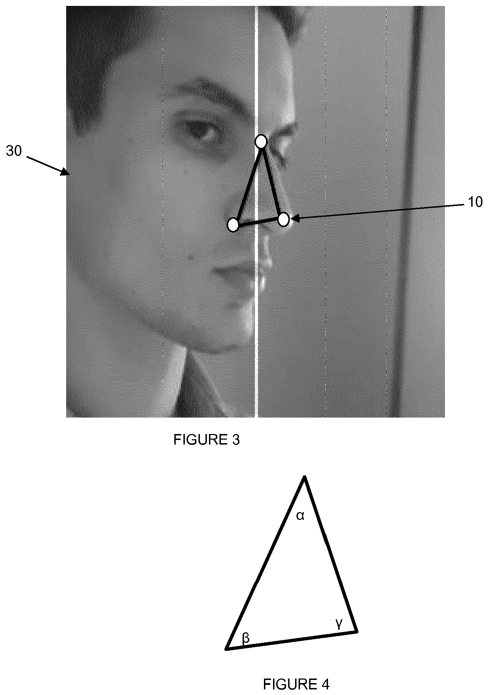

De même, on peut prévoir de calculer les valeurs de certains angles à partir de trois points biométriques 10 prédéfinis. Comme illustré sur la figure 3 et figure 4, on prévoit par exemple de calculer les angles α, β et y qui correspondent aux extrémités du nez de l'utilisateur, et d'enregistrer ces valeurs dans le fichier de données 40.

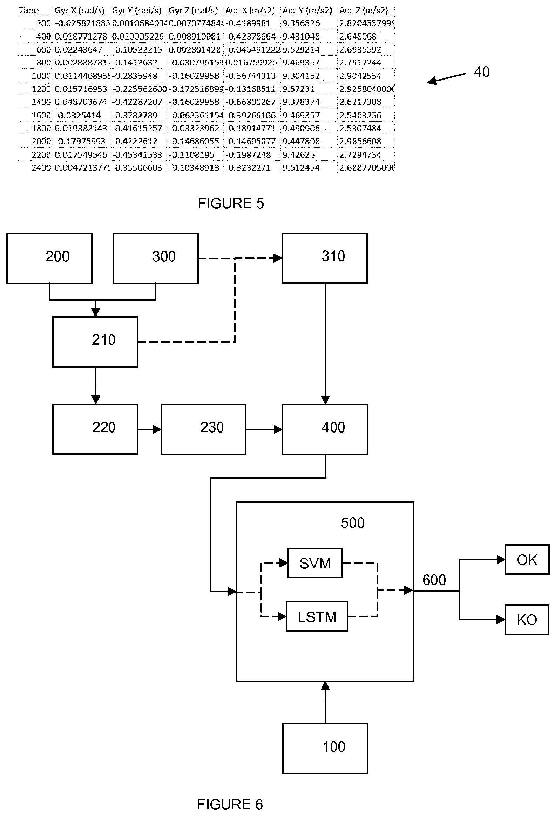

Un exemple d'un extrait de fichier de données 40 est illustré sur la figure 5. Les différentes colonnes de gauche à droite correspondent respectivement au code temporel (Time), à la rotation de l'objet communicant 20 sur lui-même selon l'axe X (Gyr X(rad/s)), selon l'axe Y (Gyr Y(rad/s)) et selon l'axe Z (Gyr Z(rad/s)), à l'accélération mesurée selon l'axe X (Acc X(m/s2)), selon l'axe axe Y (Acc Y(m/s2)) et selon l'axe Z (Acc Z(m/s2)). D'autres colonnes peuvent être ajoutées et comprendre par exemple comme discuté ci-dessus, les valeurs des angles α, β et y ou d'autres valeurs.

On peut prévoir que les données enregistrées dans le fichier de données 40 ont été préalablement filtrées, par exemple pour prendre en compte les mouvements parasites introduits par la manipulation de l'objet communicant.

### Algorithme de classification automatique

On prévoit d'appliquer 500 un algorithme de classification automatique par apprentissage automatique au fichier de données 40, c'est-à-dire qu'on applique une méthode d'apprentissage automatique aux données de la matrice basée sur une intelligence artificielle, pour caractériser si ces données correspondent à un visage 30 pris dans des conditions normales ou non.

Dans un mode de réalisation, on prévoit que l'algorithme de classification automatique par apprentissage automatique est monoclasse, ce qui permet d'avoir une classification rapide.

Par exemple le temps de calcul peut prendre moins d'une fois le temps d'acquisition sur une machine standard, par exemple un ordinateur individuel.

En l'espèce, on prévoit que la classe unique est la classe qualifiée de « vrai » c'est-à-dire que l'apprentissage automatique a été effectué sur un jeu de séquences vraies.

Dans un mode de réalisation, on prévoit que l'algorithme de classification automatique par apprentissage automatique est mutliclasse, ce qui permet d'avoir une classification moins rapide que le monoclasse mais un résultat plus fin, c'est-à-dire qu'il permet de détecter par exemple le type d'attaque, chaque classe autre que la classe « vraie » correspondant à un type d'attaque, par exemple une classe « attaque par masque », etc. l'apprentissage automatique ayant été effectué sur un jeu de séquences comprenant de telles attaques.

De préférence, l'algorithme de classification automatique par apprentissage automatique est supervisé, et vise notamment à détecter la classe « vraie », c'est-à-dire que les données du fichier de données 40 sont classées par l'algorithme de classification automatique par apprentissage automatique dans la classe prédéterminée « vraie », considérée comme correspondant à un vrai visage 30.

**Dans un mode premier de réalisation,** l'algorithme de classification automatique par apprentissage automatique est basé sur une machine à vecteurs de support (SVM). Au sens de la présente invention, on considère que le SVM est une des branches de l'intelligence artificielle.

**Dans un deuxième mode de réalisation,** l'algorithme de classification automatique par apprentissage automatique est basé sur un réseau de neurones artificiels.

En particulier, on peut prévoir que le réseau de neurones artificiels est de type longue mémoire à court terme, plus connu sous l'acronyme LSTM pour « Long Short-Term Memory » en Anglais, qui sont des réseaux spécialisés dans l'apprentissage automatique des séquences et moins sensible au bruit que les machines à vecteurs de support.

D'autres types de réseau sont possibles, notamment des réseaux récurrents, par exemple tels que des réseaux Elman, des réseaux Jordan, des réseaux Hopfield ; un réseau récurrent à portes ou GRU pour « Gated Recurrent Unit » en Anglais, un réseau BAM pour « bidirectional associative memory » en Anglais, un réseau basé sur l'attention ou « Attention Based Network » en Anglais, un réseau à renforcement d'apprentissage ou RL pour « Reinforcement Learning » etc.

**Dans un troisième mode de réalisation,** l'algorithme de classification automatique par apprentissage automatique est basé sur une analyse en composantes principales, de préférence couplée à un calcul de moyenne quadratique, ou RMS pour root-mean-square en anglais.

**Quel que soit le mode de réalisation,** on a de préférence préalablement prévu une étape 100 d'initialisation, comprenant l'acquisition de plusieurs séquences de trames vidéo de plusieurs visages 30 respectifs, et l'enregistrement de l'accélération subie par la caméra pendant l'acquisition desdites séquences.

L'apprentissage automatique est de préférence effectué sur un ensemble de données correspondant au moins à une pluralité de visages 30 authentiques, permettant de définir la classe « vraie ».

L'apprentissage automatique peut être mis en oeuvre sur une séquence de N images successives, avec N un nombre entier dont la valeur est prédéterminée.

On peut prévoir un enrichissement permanent de la classification par capitalisation des données accumulées grâce à l'invention sur une pluralité de visages.

On peut aussi prévoir de définir une pluralité de classes vraies et/ou une pluralité de classes fausses, par exemple pour affiner le type d'attaques détectées et définir de nouvelles classes, c'est-à-dire de nouveaux types d'attaques, dans le temps.

L'étape de classification automatique par apprentissage automatique peut être mise en oeuvre sur l'objet communicant 20. De préférence, elle est effectuée sur un serveur 50 distant, ce qui sécurise les calculs contre le piratage du système d'exploitation de l'objet communicant 20.

De même, l'extraction des points biométriques 10 peut être réalisée sur l'objet communicant 20, à supposer que son système d'exploitation soit intègre, c'est-à-dire qu'il n'est pas ou n'a pas été piraté pour y injecter une vidéo. Autrement, on peut réaliser l'extraction des points biométriques 10 sur un serveur 50 distant auquel est envoyé la vidéo.

L'algorithme de classification automatique par apprentissage automatique permet de classer les données du fichier de données 40 en fonction de l'apprentissage automatique et de l'étape d'initialisation.

Le classement correspond par exemple à émettre 600 un signal de classification dont la valeur correspond à la classe attribuée par l'algorithme de classification automatique par apprentissage automatique.

Par exemple sur la figure 6 le signal OK signifie que le visage est reconnu comme vrai et le signal KO que le visage est reconnu comme faux.

Comme exposé précédemment, en fonction de l'algorithme de classification automatique par apprentissage automatique choisi, on peut prévoir plus de deux signaux de sortie pour un algorithme multiclasse, de sorte à déterminer la classification du type de faux candidat, par exemple un masque, une attaque par téléphone intelligent, une attaque par séquence vidéo injectée, etc.

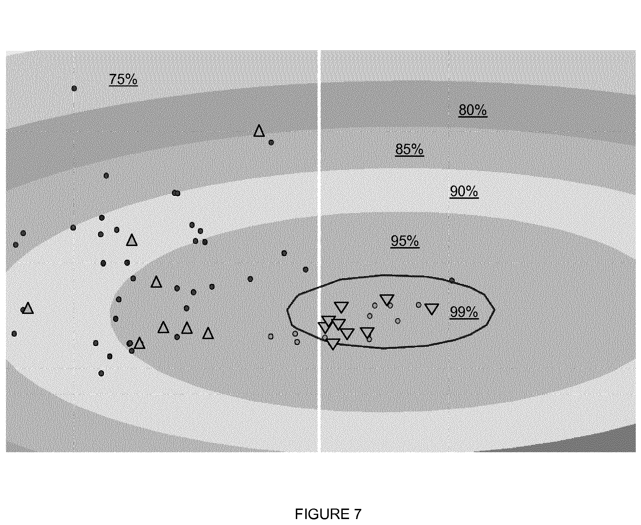

Par exemple, la figure 7 représente l'application d'un algorithme de classification automatique par apprentissage automatique multiclasse basé sur une machine à vecteurs de support (SVM). La figure 7 est issue de tests réalisés par la demanderesse.

La frontière du SVM est indiquée par une ligne noire continue (résultat certain à plus de 99%).

Les triangles tête en bas correspondent à l'apprentissage automatique (initialisation) avec de vrais visages ; et les triangles tête en haut correspondent aux résultats issus d'un apprentissage automatique avec de faux visages (masques).

Les ronds gris clair correspondent aux résultats issus de tests avec de vrais visages ; et les ronds gris foncé correspondent aux résultats issus de tests avec de faux visages (masques).

### Nomenclature

- 10: Point biométrique
- 20: Objet communicant
- 30: visage
- 40: Fichier de données
- 50: Serveur
- 100: Initialisation
- 200: Acquisition séquence vidéo
- 210: Sélection de trames vidéo
- 220: Application algorithme de reconnaissance faciale
- 230: Extraction des coordonnées d'un ensemble de points biométriques prédéterminés
- 300: Enregistrement des données de l'accéléromètre
- 310: Détermination de la valeur de l'accélération subie par la caméra
- 400: Génération et enregistrement dans une mémoire du fichier de données
- 500: Application d'un algorithme de classification automatique par apprentissage automatique
- 600: Emission d'un signal de classification

## Revendications

1. Procédé de détection de l'usurpation d'un visage (30) d'un sujet, par traitement automatique d'un fichier de données (40), comprenant une étape consistant à :
- Acquérir (200) une séquence de trames vidéo d'un visage (30) avec une caméra, chaque trame vidéo comprenant un code temporel,
- Enregistrer (300) l'accélération subie par la caméra pendant l'acquisition de la séquence,
- sélectionner (210) tout ou partie des trames vidéo, et pour chaque trame sélectionnée :
∘ appliquer un algorithme de reconnaissance faciale (220) pour générer un ensemble de points biométriques (10) ;
∘ identifier un ensemble de points biométriques (10) parmi l'ensemble de points biométriques (10) générés ;
∘ sélectionner un ensemble de points biométriques (10) prédéterminés parmi l'ensemble de points biométriques (10) identifiés ;
∘ et extraire (230) les coordonnées de l'ensemble des points biométriques (10) sélectionnés ;
∘ déterminer (310) la valeur de l'accélération subie par la caméra à l'instant correspondant au code temporel de la trame, **caractérisé en ce que**
- Générer (400) et enregistrer dans une mémoire un fichier de données (40) comprenant de manière synchrone,
∘ le résultat d'au moins une fonction mathématique appliquée aux coordonnées dudit ensemble de points biométriques prédéterminés, et
∘ le résultat d'au moins une fonction mathématique appliquée auxdites valeurs de l'accélération subie par la caméra,
- appliquer un algorithme de classification automatique par apprentissage automatique (500) audit fichier de données (40), et
- émettre (600) un signal (OK, KO) représentatif de la classe attribuée par l'algorithme de classification automatique par apprentissage automatique au fichier de données, l'identification d'un point biométrique (10) consiste à attribuer audit point biométrique (10) un ensemble de valeurs comprenant au moins :
- les coordonnées dudit point biométrique (10) ;
- un élément morphologique local du visage, correspondant à la position dudit point biométrique (10),
- un identifiant unique pour ledit point biométrique (10).

2. Procédé selon la revendication 1, dans lequel les étapes consistant à :
- acquérir (200) une séquence de trames vidéo, et
- enregistrer (300) l'accélération subie par la caméra,
sont mises en oeuvre par un objet communicant (20) équipé d'une caméra et d'un accéléromètre, ledit objet communicant étant mis en mouvement selon un parcours courbe imposé par rapport audit visage (30), ledit visage étant immobile pendant l'acquisition de la séquence de trames vidéo par la caméra.

3. Procédé selon l'une quelconque des revendications précédentes, dans lequel :
- L'étape (500) consistant à appliquer un algorithme de classification automatique par apprentissage automatique comprend l'application d'un algorithme de classification automatique par apprentissage automatique monoclasse ou mutliclasses.

4. Procédé selon l'une quelconque des revendications précédentes, dans lequel :
- L'étape (500) consistant à appliquer un algorithme de classification automatique par apprentissage automatique comprend l'application d'un algorithme de classification automatique par apprentissage automatique supervisé.

5. Procédé selon la revendication 4, dans lequel :
- L'étape (500) consistant à appliquer un algorithme de classification automatique par apprentissage automatique comprend l'application d'un algorithme de classification automatique par apprentissage automatique basé sur un réseau de neurones artificiels, sur une machine à vecteurs de support (SVM) ; ou de type longue mémoire à court terme (LSTM).

6. Procédé selon l'une quelconque des revendications précédentes, comprenant en outre une étape consistant à détecter si le flux vidéo dont est extraite la séquence de trames vidéo a été interrompu

7. Procédé selon la revendication 6, dans lequel :
si le flux vidéo dont est extraite la séquence de trames vidéo a été interrompu, le procédé comprend en outre une étape consistant à détecter au moins la trame à partir de laquelle ledit flux vidéo a été interrompu.

8. Procédé selon l'une quelconque des revendications précédentes, comprenant en outre une étape (100) d'initialisation, comprenant l'acquisition de plusieurs séquences de trames vidéo et de l'accélération subie par la caméra pendant l'acquisition de chacune desdites séquences, chaque séquence de trames vidéo correspondant à un visage (30) respectif.

9. Procédé selon l'une quelconque des revendications 2 à 8, dans lequel :
les étapes consistant à :
- sélectionner (210) tout ou partie de l'ensemble de trames de la séquence vidéo, et
- extraire (230), sur chaque image de l'ensemble de trames sélectionnées, les coordonnées d'un ensemble de points biométriques prédéterminés et le code temporel de la trame correspondante,
Sont mises en oeuvre :
a) Soit sur l'objet communicant (20) pour créer ledit fichier de données (40),
Le procédé comprenant alors en outre une étape d'envoi dudit fichier de données (40) par ledit objet communicant (20) à un serveur (50) configuré pour mettre en œuvre les étapes consistant à :
- appliquer (500) un algorithme de classification automatique par apprentissage automatique au fichier de données,
- émettre (600) un signal représentatif de la classe attribuée par l'algorithme de classification automatique par apprentissage automatique au fichier de données ;
Ledit signal représentatif de la classe attribuée pouvant être transmis audit objet communicant (20) par le serveur ;
b) Soit sur un serveur (50),
Le procédé comprenant alors en outre une étape d'envoi de ladite séquence vidéo par l'objet communicant (20) audit serveur (50), le serveur (50) étant configuré pour mettre en oeuvre les étapes consistant à :
- générer (400) et enregistrer dans une mémoire un fichier de données (40)
- appliquer (500) un algorithme de classification automatique par apprentissage automatique au fichier de données, et
- émettre (600) un signal représentatif de la classe attribuée par l'algorithme de classification automatique par apprentissage automatique au fichier de données.

10. Programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Verfahren zur Detektion der Imitation eines Gesichts (30) einer Person durch automatische Verarbeitung einer Datendatei (40), beinhaltend einen Schritt, der aus Folgendem besteht:
- Erfassen (200) einer Sequenz von Videorahmen eines Gesichts (30) mit einer Kamera, wobei jeder Videorahmen einen Zeitcode beinhaltet,
- Aufzeichnen (300) der Beschleunigung, die die Kamera während der Erfassung der Sequenz erfährt,
- Auswählen (210) aller oder eines Teils der Videorahmen, und für jeden ausgewählten Videorahmen:
∘ Anwenden eines Gesichtserkennungsalgorithmus (220), um einen Satz biometrischer Punkte (10) zu generieren;
∘ Identifizieren eines Satzes biometrischer Punkte (10) innerhalb des Satzes generierter biometrischer Punkte (10);
∘ Auswählen eines Satzes vorbestimmter biometrischer Punkte (10) innerhalb des Satzes identifizierter biometrischer Punkte (10);
∘ und Extrahieren (230) der Koordinaten des Satzes ausgewählter biometrischer Punkte (10);
∘ Bestimmen (310) des Werts der Beschleunigung, die die Kamera zu dem Zeitpunkt, der dem Zeitcode des Rahmens entspricht, erfährt, **dadurch gekennzeichnet, dass**
- Erzeugen (400) und Aufzeichnen, in einem Speicher, einer Datendatei (40), die auf synchrone Weise Folgendes beinhaltet:
∘ das Ergebnis mindestens einer mathematischen Funktion, die auf die Koordinaten des Satzes vorbestimmter biometrischer Punkte angewendet wird, und
∘ das Ergebnis mindestens einer mathematischen Funktion, die auf die Werte der Beschleunigung, die die Kamera erfährt, angewendet wird,
- Anwenden eines Algorithmus zur automatischen Klassifikation durch maschinelles Lernen (500) auf die Datendatei (40) und
- Ausgeben (600) eines Signals (OK, KO), das für die Klasse repräsentativ ist, die der Datendatei durch den Algorithmus zur automatischen Klassifikation durch maschinelles Lernen zugewiesen wird,
die Identifikation eines biometrischen Punkts (10) darin besteht, dem biometrischen Punkt (10) einen Satz Werte zuzuweisen, der mindestens Folgendes beinhaltet:
- die Koordinaten des biometrischen Punkts (10);
- ein lokales morphologisches Element des Gesichts, das der Position des biometrischen Punkts (10) entspricht,
- eine eindeutige Kennung für den biometrischen Punkt (10).

2. Verfahren nach Anspruch 1, wobei die Schritte, die aus Folgendem bestehen:
- Erfassen (200) einer Sequenz von Videorahmen und
- Erfassen (300) der Beschleunigung, die die Kamera erfährt,
durch ein kommunizierendes Objekt (20) umgesetzt werden, das mit einer Kamera und einem Beschleunigungsmesser ausgerüstet ist, wobei das kommunizierende Objekt gemäß einer vorgegebenen gekrümmten Bahn in Bezug auf das Gesicht (30) bewegt wird, wobei das Gesicht während der Erfassung der Sequenz von Videorahmen durch die Kamera bewegungslos ist.

3. Verfahren nach einem der vorhergehenden Ansprüche, wobei:
- der Schritt (500), der darin besteht, einen Algorithmus zur automatischen Klassifikation durch maschinelles Lernen anzuwenden, die Anwendung eines Algorithmus zur einklassigen oder mehrklassigen automatischen Klassifikation durch maschinelles Lernen beinhaltet.

4. Verfahren nach einem der vorhergehenden Ansprüche, wobei:
- der Schritt (500), der darin besteht, einen Algorithmus zur automatischen Klassifikation durch maschinelles Lernen anzuwenden, die Anwendung eines Algorithmus zur automatischen Klassifikation durch überwachtes maschinelles Lernen beinhaltet.

5. Verfahren nach Anspruch 4, wobei:
- der Schritt (500), der darin besteht, einen Algorithmus zur automatischen Klassifikation durch maschinelles Lernen anzuwenden, die Anwendung eines Algorithmus zur automatischen Klassifikation durch maschinelles Lernen auf Basis eines künstlichen neuronalen Netzwerks, einer Support-Vector-Machine (SVM); oder vom Typ LSTM (Long Short-Term Memory) beinhaltet.

6. Verfahren nach einem der vorhergehenden Ansprüche, ferner beinhaltend einen Schritt, der darin besteht, zu detektieren, ob der Videostrom, aus dem die Sequenz von Videorahmen extrahiert wird, unterbrochen wurde.

7. Verfahren nach Anspruch 6, wobei:
wenn der Videostrom, aus dem die Sequenz von Videorahmen extrahiert wird, unterbrochen wurde, das Verfahren ferner einen Schritt beinhaltet, der darin besteht, mindestens den Rahmen zu detektieren, ab dem der Videostrom unterbrochen wurde.

8. Verfahren nach einem der vorhergehenden Ansprüche, ferner beinhaltend einen Schritt (100) der Initialisierung, der die Erfassung mehrerer Sequenzen von Videorahmen und der Beschleunigung, die die Kamera während der Erfassung jeder der Sequenzen erfährt, beinhaltet, wobei jede Sequenz von Videorahmen einem jeweiligen Gesicht (30) entspricht.

9. Verfahren nach einem der Ansprüche 2 bis 8, wobei:
die Schritte, die aus Folgendem bestehen:
- Auswählen (210) des gesamten oder eines Teils des Satzes Rahmen der Videosequenz und
- Extrahieren (230), aus jedem Bild des Satzes ausgewählter Rahmen, der Koordinaten eines Satzes vorbestimmter biometrischer Punkte und des Zeitcodes des entsprechenden Rahmens,
umgesetzt werden:
a) entweder auf dem kommunizierenden Objekt (20), um die Datendatei (40) zu erzeugen,
wobei das Verfahren in diesem Fall ferner einen Schritt des Sendens der Datendatei (40) durch das kommunizierende Objekt (20) an einen Server (50) beinhaltet, der dazu konfiguriert ist, die Schritte umzusetzen, die aus Folgendem bestehen:
- Anwenden (500) eines Algorithmus zur automatischen Klassifikation durch maschinelles Lernen auf die Datendatei,
- Ausgeben (600) eines Signals, das für die Klasse repräsentativ ist, die der Datendatei durch den Algorithmus zur automatischen Klassifikation durch maschinelles Lernen zugewiesen wird;
wobei das Signal, das für die zugewiesene Klasse repräsentativ ist, durch den Server an das kommunizierende Objekt (20) übertragen werden kann;
b) oder auf einem Server (50),
wobei das Verfahren in diesem Fall ferner einen Schritt des Sendens der Videosequenz durch das kommunizierende Objekt (20) an den Server (50) beinhaltet, wobei der Server (50) dazu konfiguriert ist, die Schritte umzusetzen, die aus Folgendem bestehen:
- Erzeugen (400) und Aufzeichnen, in einem Speicher, einer Datendatei (40),
- Anwenden (500) eines Algorithmus zur automatischen Klassifikation durch maschinelles Lernen auf die Datendatei und
- Ausgeben (600) eines Signals, das für die Klasse repräsentativ ist, die der Datendatei durch den Algorithmus zur automatischen Klassifikation durch maschinelles Lernen zugewiesen wird.

10. Computerprogramm, das Programmcodeanweisungen umfasst, die bei der Ausführung des Programms auf einem Computer die Schritte des Verfahrens nach einem der vorhergehenden Ansprüche ausführen.

## Claims

1. Method for detecting spoofing of a subject's face (30) by automatically processing a data file (40), comprising a step of:
- acquiring (200) a sequence of video frames of a face (30) with a camera, each video frame comprising a time code,
- recording (300) the acceleration experienced by the camera during the acquisition of the sequence,
- selecting (210) all or some of the video frames and, for each selected frame:
∘ applying a facial recognition algorithm (220) in order to generate a set of biometric points (10);
∘ identifying a set of biometric points (10) from among the set of generated biometric points (10);
∘ selecting a set of predetermined biometric points (10) from among the set of identified biometric points (10);
∘ and extracting (230) the coordinates of the set of selected biometric points (10);
∘ determining (310) the value of the acceleration experienced by the camera at the instant corresponding to the time code of the frame, **characterized in that**
- generating (400), and recording in a memory, a data file (40) comprising, synchronously,
∘ the result of at least one mathematical function applied to the coordinates of said set of predetermined biometric points, and
∘ the result of at least one mathematical function applied to said values of the acceleration experienced by the camera,
- applying a machine-learning automatic classification algorithm (500) to said data file (40), and
- outputting (600) a signal (OK, KO) representative of the class assigned by the machine-learning automatic classification algorithm to the data file,
the identification of a biometric point (10) consists in assigning said biometric point (10) a set of values comprising at least:
- the coordinates of said biometric point (10);
- a local morphological element of the face, corresponding to the position of said biometric point (10),
- a unique identifier for said biometric point (10).

2. Method according to Claim 1, wherein the steps of:
- acquiring (200) a sequence of video frames, and
- recording (300) the acceleration experienced by the camera,
are implemented by a communicating object (20) equipped with a camera and with an accelerometer, said communicating object being set in motion along a curved path imposed with respect to said face (30), said face being stationary while the sequence of video frames is being acquired by the camera.

3. Method according to either one of the preceding claims, wherein:
- the step (500) of applying a machine-learning automatic classification algorithm comprises applying a single-class or multi-class machine-learning automatic classification algorithm.

4. Method according to any one of the preceding claims, wherein:
- the step (500) of applying a machine-learning automatic classification algorithm comprises applying a supervised machine-learning automatic classification algorithm.

5. Method according to Claim 4, wherein:
- the step (500) of applying a machine-learning automatic classification algorithm comprises applying a machine-learning automatic classification algorithm based on an artificial neural network, on a support vector machine (SVM); or a long short-term memory (LSTM).

6. Method according to any one of the preceding claims, furthermore comprising a step of detecting whether the video stream from which the sequence of video frames is extracted has been interrupted.

7. Method according to Claim 6, wherein:
if the video stream from which the sequence of video frames is extracted has been interrupted, the method furthermore comprises a step of detecting at least the frame starting from which said video stream has been interrupted.

8. Method according to any one of the preceding claims, furthermore comprising an initialization step (100), comprising acquiring multiple sequences of video frames and the acceleration experienced by the camera during the acquisition of each of said sequences, each sequence of video frames corresponding to a respective face (30).

9. Method according to any one of Claims 2 to 8, wherein:
the steps of:
- selecting (210) all or some of the set of frames of the video sequence, and
- extracting (230), from each image of the set of selected frames, the coordinates of a set of predetermined biometric points and the time code of the corresponding frame,
are implemented:
a) either on the communicating object (20) so as to create said data file (40),
the method then furthermore comprising a step of said communicating object (20) sending said data file (40) to a server (50) configured to implement the steps of:
- applying (500) a machine-learning automatic classification algorithm to the data file,
- outputting (600) a signal representative of the class assigned by the machine-learning automatic classification algorithm to the data file;
said signal representative of the assigned class being able to be transmitted to said communicating object (20) by the server;
b) or on a server (50),
the method then furthermore comprising a step of the communicating object (20) sending said video sequence to said server (50), the server (50) being configured to implement the steps of:
- generating (400), and recording in a memory, a data file (40),
- applying (500) a machine-learning automatic classification algorithm to the data file, and
- outputting (600) a signal representative of the class assigned by the machine-learning automatic classification algorithm to the data file.

10. Computer program comprising program code instructions for executing the steps of the method according to any one the preceding claims when said program is executed on a computer.
